# EUROPEAN PATENT APPLICATION

(11) **EP 3 713 341 A1**
(43) Date of publication of application: **23.09.2020**
(21) Application number: 18877970.6
(22) Date of filing: 17.10.2018
(51) Int. Cl.: H04W 72/04

(54) **CSI TRANSMISSION METHOD AND DEVICE**

(30) Priority: 17.11.2017 CN 201711149045
(71) Applicant: Vivo Mobile Communication Co., Ltd., Dongguan, Guangdong 523860 (CN)
(72) Inventor: LU, Zhi, Dongguan Guangdong 523860 (CN); PAN, Xueming, Dongguan Guangdong 523860 (CN); SHEN, Xiaodong, Dongguan Guangdong 523860 (CN); MA, Jingzhi, Dongguan Guangdong 523860 (CN)
(74) Representative: Winter, Brandl, Fürniss, Hübner, Röss, Kaiser, Polte - Partnerschaft mbB
(86) International application number: PCT/CN2018/110613
(87) International publication number: WO 2019/095919

(57) **Abstract**

A CSI transmission method and apparatus are provided, which are applied to a base station to resolve the problem of how to make a scheduling by a base station more accurate. The method includes: transmitting indication information to UE, where the indication information is used for the UE to transmit CSI to the base station; and receiving a short PUCCH transmitted by the UE, where the short PUCCH includes the CSI. In the embodiments of the present disclosure, when needing to schedule UE, a base station may instruct the UE to report CSI by means of indication information. Since the CSI reported by the UE at this time can accurately reflect a current channel state, the base station can schedule the UE more accurately according to the current channel state.

## Description

### CROSS-REFERENCE TO RELATED APPLICATION

The present application claims a priority to Chinese Patent Application No. 201711149045.5 filed in China on November 17, 2017 and entitled "CHANNEL STATE INFORMATION TRANSMISSION METHOD AND APPARATUS", a disclosure of which is incorporated in its entirety by reference herein.

### TECHNICAL FIELD

Embodiments of the present disclosure relate to the field of communication technology, in particular to a channel state information (CSI) transmission method and apparatus.

### BACKGROUND

Generally, when scheduling user equipment (UE), a base station needs to schedule the UE according to CSI to obtain better performance. Therefore, the base station needs to acquire CSI.

At present, in a procedure of acquiring CSI by the base station, the base station may acquire, on a physical uplink control channel (PUCCH), CSI periodically transmitted by the UE, or acquire periodic CSI or aperiodic CSI through a physical uplink shared channel (PUSCH).

However, in case that the base station schedules the UE frequently, periodic CSI cannot accurately reflect a current channel condition. As a result, CSI acquired by the base station may be inaccurate, leading to inaccurate scheduling by the base station.

### SUMMARY

Embodiments of the present disclosure provide a CSI transmission method and apparatus, to resolve the problem of how to make scheduling by a base station more accurate.

In a first aspect, the present disclosure provides in some embodiments a CSI transmission method, including: transmitting, by a base station, indication information to UE, where the indication information is used for the UE to transmit CSI to the base station; and receiving, by the base station, a short PUCCH transmitted by the UE, where the short PUCCH includes the CSI.

In a second aspect, the present disclosure further provides in some embodiments a CSI transmission method, including: receiving, by UE, indication information transmitted by a base station, where the indication information is used for the UE to transmit CSI to the base station; and transmitting, by the UE, a short PUCCH to the base station according to the indication information, where the short PUCCH includes the CSI.

In a third aspect, the present disclosure further provides in some embodiments a base station, including a transmission module and a reception module, where the transmission module is configured to transmit indication information to UE, where the indication information is used for the UE to transmit CSI to the base station; and the reception module is configured to receive a short PUCCH transmitted by the UE, where the short PUCCH includes the CSI.

In a fourth aspect, the present disclosure further provides in some embodiments UE, including a reception module and a transmission module, where the reception module is configured to receive indication information transmitted by a base station, where the indication information is used for the UE to transmit CSI to the base station; and the transmission module is configured to transmit a short PUCCH to the base station according to the indication information, where the short PUCCH includes the CSI.

In a fifth aspect, the present disclosure provides in some embodiments a base station, including a processor, a storage, and a computer program stored in the storage and configured to be executed by the processor, where the processor is configured to execute the computer program to implement the steps in the foregoing CSI transmission method according to the first aspect.

In a sixth aspect, the present disclosure provides in some embodiments UE, including a processor, a storage, and a computer program stored in the storage and configured to be executed by the processor, where the processor is configured to execute the computer program to implement the steps in the CSI transmission method according to the second aspect.

In a seventh aspect, the present disclosure provides in some embodiments a computer-readable storage medium storing therein a computer program, where the computer program is configured to be executed by a processor to implement the steps in the foregoing CSI transmission method according to the first aspect, or the computer program is configured to be executed by a processor to implement the steps in the foregoing CSI transmission method according to the second aspect.

In the embodiments of the present disclosure, when needing to schedule UE, a base station may instruct the UE to report CSI by means of indication information. Since the CSI reported by the UE at this time can accurately reflect a current channel state, the base station can schedule the UE more accurately according to the current channel state.

### BRIEF DESCRIPTION OF THE DRAWINGS

The accompanying drawings described herein are used to provide a further understanding of the present disclosure and constitute a part of the present disclosure, and the schematic embodiments of the present disclosure and the description thereof are used to explain the present disclosure and do not constitute an undue limitation on the present disclosure. In the accompanying drawings:
Fig. 1 is a schematic diagram of a communication system according to some embodiments of the present disclosure;
Fig. 2 is a schematic interaction diagram of a CSI transmission method according to some embodiments of the present disclosure;
Fig. 3 is a schematic diagram of a mirror frequency hopping pattern according to some embodiments of the present disclosure;
Fig. 4 is a schematic structural diagram of a base station according to some embodiments of the present disclosure;
Fig. 5 is a schematic structural diagram of UE according to some embodiments of the present disclosure;
Fig. 6 is a schematic hardware structure diagram of UE according to some embodiments of the present disclosure;
Fig. 7 is a schematic hardware structure diagram of a base station according to some embodiments of the present disclosure.

### DETAILED DESCRIPTION

The technical solutions in the embodiments of the present disclosure are clearly and thoroughly described below with reference to the accompanying drawings of the embodiments of the present disclosure. Apparently, the described embodiments are some embodiments of the present disclosure, but are not all the embodiments. Based on the embodiments of the present disclosure, all other embodiments derived by a person of ordinary skill in the art without creative efforts shall fall within the scope of the present disclosure.

It is noted that the character "/" herein represents an "or" relationship. For example, "A/B" may represent "A or B". The term "and/or" herein is only used to describe an association relationship of associated objects, and represents that three kinds of relationships may exist. For example, A and/or B may represent the following three cases: A exists alone, both A and B exist, and B exists alone. "A plurality of" means "two or more".

It should be noted that in the embodiments of the present disclosure, the term such as "example" or "for example" is used to represent an example, an illustration or a description. Any embodiment or design solution described with an "example" or "for example" in the embodiments of the present disclosure should not be construed as more preferred or advantageous over other embodiments or design solutions. Specifically, the use of the term such as "example" or "for example" is intended to represent related concept in a specific manner.

The technical solutions in the present disclosure may be applied to various communication systems, for example, a Global System for Mobile Communications (GSM), a Code Division Multiple Access (CDMA) system, a Wideband Code Division Multiple Access (WCDMA) system, a General Packet Radio Service (GPRS) system, a Long Term Evolution (LTE)/an LTE-Advanced (LTE-A) system, and a new radio (NR) system, and a person skilled in the art may understand that the embodiments of the present disclosure are not limited to the application in the foregoing communication systems.

User equipment (UE) may also be referred to as a mobile terminal, mobile UE or the like, and may communicate with one or more core networks (CNs) through a radio access network (RAN). The UE may be a mobile terminal, for example, a mobile phone (also referred to as a "cellular" phone) or a computer equipped with a mobile terminal. For example, the UE may be a portable, pocket-sized, handheld, computer built-in, or in-vehicle mobile apparatus, which exchanges voice and/or data with the RAN.

A base station may be a base transceiver station (BTS) in GSM or CDMA or may be a NodeB (NB) in a WCDMA system or may be an evolutional NodeB (eNB or e-NodeB) in LTE or a 5G gNB or a base station of a future evolved version. The present disclosure is not limited to the used terms. However, for ease of description, a base station (or referred to as a gNB) is used as an example for description in the following embodiments.

The technical solutions provided in the embodiments of the present disclosure are described below in detail with reference to the accompanying drawings.

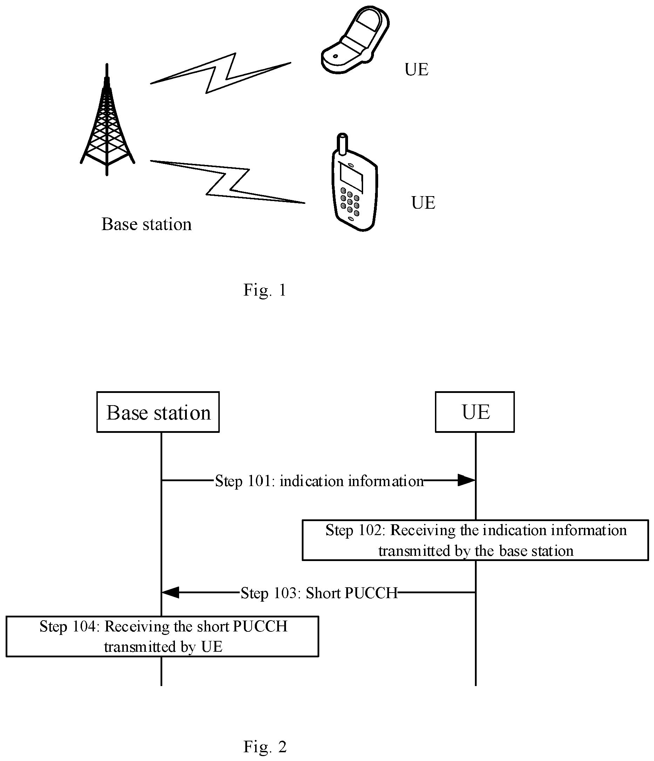

Fig. 1 is a schematic diagram of a communication system according to some embodiments of the present disclosure. The communication system includes a base station and UE. The base station may transmit indication information to the UE as required (for example, the base station determines that the UE needs to be scheduled), so that the UE reports CSI. After receiving the indication information transmitted by the base station, the UE reports the CSI according to the indication information. The CSI reported by the UE at this time can accurately reflect a current channel state, therefore the base station can schedule the UE more accurately according to the current channel state.

The UE and the base station as shown in Fig. 1 can both perform a CSI transmission method in some embodiments of the present disclosure. Specifically, the method is described in detail in the following method embodiments. Details thereof are not described here.

It is noted that, one of the objectives of the CSI transmission method in the embodiments of the present disclosure is such that the base station acquires aperiodic CSI on a short PUCCH, that is, the UE transmits aperiodic CSI to the base station via the short PUCCH.

The CSI transmission method provided in some embodiments of the present disclosure is schematically described below with reference to the UE and the base station as shown in Fig. 1.

Fig. 2 is a schematic interaction diagram of a CSI transmission method according to some embodiments of the present disclosure. As shown in Fig. 2, the method may include a step 101 to a step 104.

The step 101 includes: transmitting, by a base station, indication information to UE.

The indication information is used for the UE to transmit CSI to the base station.

Optionally, in some embodiments of the present disclosure, the indication information may include at least one of the following: a time interval, a starting symbol of the short PUCCH, a length of the short PUCCH, a starting resource block of the short PUCCH, a number of resource blocks occupied by the short PUCCH, frequency hopping information, or a cyclic redundancy check (CRC) value. the time interval is a time gap between a slot when the UE receives the indication information and a slot when the UE transmits the short PUCCH, and the frequency hopping information is used for indicating whether frequency hopping is required when the UE transmits the short PUCCH.

It is noted that, symbols in the embodiments of the present disclosure are all transmission symbols, for example, an orthogonal frequency division multiplexing (OFDM) symbol.

Optionally, in some embodiments of the present disclosure, the base station may use downlink control information (DCI) in a physical downlink control channel (PDCCH) to transmit the indication information to the UE. That is, the indication information may be carried in the DCI. Specifically, the indication information may be carried in a field of the DCI. It may be understood that, in some embodiments of the present disclosure, when the indication information includes multiple items, the multiple items may be located in one field of the DCI or may be located in a plurality of fields of the DCI.

For example, Table 1 shows an example of the indication information carried in the DCI according to some embodiments of the present disclosure.

**Table 1**

| Indication information | Range of value | Occupied bits |
|---|---|---|
| Time interval | (0, 1x, 2x, 3x) | 2 bits |
| Starting symbol of a short PUCCH | 0 to 13 symbols | 4 bits |
| Length of the short PUCCH | 1 or 2 symbols | 1 bit |
| Starting resource block of the short PUCCH | 0 to 274 | 9 bits |
| Number of resource blocks occupied by the short PUCCH | 1 to 16 | 4 bits |
| Frequency hopping information | on/off | 1 bit |
| CRC value | | 2 bits |

Various indication information in Table 1 is further described below.

The time interval is a time gap that is configured by the base station for the UE and is between a slot when the UE receives the DCI and a slot when the UE transmits CSI. The UE may determine, according to the time interval, the time for the UE to transmit the CSI to the base station. For example, the time interval configured by the base station for the UE may be any value in (0, 1x, 2x, 3x) as shown in Table 1, where the value of x may be any value predefined according to an actual usage requirement. After receiving the time interval configured by the base station, the UE may transmit the CSI to the base station according to the time interval. As shown in Table 1, a field denoting the time interval may occupy two bits in the fields of the DCI.

The starting symbol of the short PUCCH is a symbol of a short PUCCH of a resource for the UE to transmit the CSI (referred to as a CSI transmission resource below) that is configured by the base station for the UE. The UE may determine, according to the starting symbol, the symbols used by the UE to transmit the short PUCCH to the base station. For example, the starting symbol configured by the base station for the UE may be any symbol in 0 to 13 as shown in Table 1. After receiving the starting symbol configured by the base station, the UE may transmit the short PUCCH to the base station starting from the starting symbol. As shown in Table 1, a field denoting the starting symbol may occupy four bits in the fields of the DCI.

The length of the short PUCCH is the length of a PUCCH carrying the CSI. As shown in Table 1, the length of the short PUCCH is one symbol or two symbols. The length of the short PUCCH may occupy one bit in the fields of the DCI.

It is noted that, the short PUCCH in some embodiments of the present disclosure is so termed compared with a common PUCCH (occupying four symbols to fourteen symbols) in the related art. The short PUCCH generally refers to a PUCCH that occupies relatively few symbols (that is, the length is relatively small). For example, a PUCCH occupying one symbol or two symbols as shown in Table 1 may be understood as a short PUCCH.

The starting resource block of the short PUCCH is a frequency domain resource block that is configured by the base station for the UE to transmit a short PUCCH. The UE may determine, according to the starting resource block, a starting resource block used by the UE to transmit a short PUCCH to the base station. For example, the starting resource block configured by the base station for the UE may be any one of 0 to 274 frequency domain resource blocks as shown in Table 1. After receiving the starting resource block configured by the base station, the UE may transmit a short PUCCH to the base station starting from the starting resource block. As shown in Table 1, a field denoting the starting resource block may occupy nine bits in the fields of the DCI.

It may be understood that if the indication information transmitted by the base station to the UE includes the starting symbol but does not include the starting resource block, the UE may transmit the short PUCCH on the starting symbol of any resource block of a short PUCCH transmission resource configured by the base station for the UE. If the indication information transmitted by the base station to the UE includes the starting resource block and the starting symbol, the UE may transmit the short PUCCH on the starting symbol of the starting resource block of the short PUCCH transmission resource configured by the base station for the UE. If the indication information transmitted by the base station to the UE includes the starting resource block, the UE may transmit the short PUCCH on any starting symbol of the starting resource block of a CSI transmission resource configured by the base station for the UE. Specifically, this may be determined according to an actual usage requirement, and is not limited in the embodiments of the present disclosure.

The number of resource blocks occupied by the short PUCCH is a total number of resource blocks of the short PUCCH transmission resource configured by the base station for the UE. For example, a number of resource blocks configured by the base station for the UE may be any value of 1 to 16 as shown in Table 1. After receiving the number of resource blocks configured by the base station, the UE may transmit a short PUCCH to the base station according to the number of resource blocks. As shown in Table 1, a field denoting the number of resource blocks may occupy four bits in the fields of the DCI.

The frequency hopping information is configured by the base station for the UE and indicates whether frequency hopping is required when the UE transmits the CSI on the short PUCCH transmission resource. For example, the frequency hopping information configured by the base station for the UE may be indicated by "on/off". For example, "on" as shown in Table 1 represents that frequency hopping is turned on, that is, frequency hopping is required; and "off" as shown in Table 1 represents "off", that is, frequency hopping is not required. After receiving the frequency hopping information configured by the base station, the UE may determine, according to the frequency hopping information, whether frequency hopping is required when the UE transmits the CSI on the short PUCCH transmission resource. As shown in Table 1, a field denoting the frequency hopping information may occupy one bit in the fields of the DCI.

The frequency hopping in some embodiments of the present disclosure refers to that two symbols of a two-symbol short PUCCH are transmitted on different frequency domain resources to obtain frequency diversity gain.

The CRC value is a value transmitted by the base station to the UE and used for error check. After receiving the DCI transmitted by the base station, the UE uses a CRC value to check whether the DCI is correctly received. In addition, the CRC value carries an identifier (ID) of the UE. The UE can use the CRC value to determine whether the DCI belongs to the UE and at the same time determine whether the DCI is damaged due to a channel condition.

It may be understood that when determining that the CRC value matches the DCI, the UE may determine that the information is correctly received, and when determining that the CRC value does not match the DCI, the UE may determine that the indication information is not correctly received.

A step 102 includes: receiving, by the UE, the indication information transmitted by the base station.

A step 103 includes: transmitting, by the UE, a short PUCCH to the base station according to the indication information.

The short PUCCH includes the CSI. That is, the UE may transmit the CSI to the base station by carrying the CSI in the short PUCCH.

After receiving the indication information transmitted by the base station, the UE may transmit the CSI to the base station according to content of the indication information. For example, when the indication information indicates the time interval, after receiving the indication information transmitted by the base station, the UE may determine, according to the time interval, a time point at which the UE begins to transmit the CSI to the base station, and the UE may begin to transmit the CSI to the base station when the time point is reached. When the indication information indicates a starting resource block and the length of the short PUCCH for the UE to transmit the CSI on the short PUCCH, the UE may determine, according to the indication information, the length of the short PUCCH for transmitting the CSI and a starting resource block of a PUCCH with the length, and the UE may transmit the CSI to the base station on the starting resource block of the short PUCCH with the length.

The step 104 includes: receiving, by the base station, the short PUCCH transmitted by the UE.

In some embodiments of the present disclosure, after receiving a short PUCCH transmitted by the UE, the base station may acquire the CSI from the short PUCCH.

In the CSI transmission method provided in some embodiments of the present disclosure, when needing to schedule UE, a base station may instruct the UE to report CSI by means of indication information. The CSI reported by the UE at this time can accurately reflect a current channel state, therefore the base station can schedule the UE more accurately according to the current channel state.

In the CSI transmission method provided in some embodiments of the present disclosure, a possible implementation is that the foregoing step 101 may be specifically implemented by following substep 101a, and the foregoing step 102 may be specifically implemented by following substep 102a.

The substep 101a includes: transmitting, by the base station, the indication information to the UE by using DCI.

The DCI may be predefined DCI. It may be understood that in some embodiments of the present disclosure, one dedicated DCI may be predefined, and the base station may transmit the indication information to the UE by using the dedicated DCI.

The substep 102a includes: receiving, by the UE by using the DCI, the indication information transmitted by the base station.

In the CSI transmission method provided in some embodiments of the present disclosure, another possible implementation is that before the step 101, the CSI transmission method provided in some embodiments of the present disclosure further includes a step 105. In this case, the foregoing step 101 may be specifically implemented by following substep 101b, and the foregoing step 102 may be specifically implemented by following substep 102b.

The step 105 includes: scrambling, by the base station, the DCI by using a radio network temporary identity (RNTI).

The RNTI is allocated by the base station to the UE and is used for distinguishing between UEs in an Evolved Universal Terrestrial Radio Access Network (EUTAN). The RNTI is an identity in an access layer. Different types of RNTIs may be categorized according to different functions. Each UE may correspond to a plurality of RNTIs. According to the functions of RNTIs, the RNTIs may be specifically categorized into a cell RNTI used for dynamically scheduled PDSCH transmission (C-RNTI), a random access RNTI used for a random access response (RA-RNTI), an RNTI used to identify transmission of a system information block (SIB) message (SI-RNTI), an RNTI used to identify transmission of a paging message (P-RNTI), a group transmission power control RNTI used to identify a UE group to which a group TPC command is transmitted (TPC-RNTI), an RNTI used for semi-persistently scheduled PDSCH transmission (SPSC-RNTI), and the like.

It is noted that, the DCI in this implementation may be common DCI in the related art. Different DCI may be obtained after DCI is scrambled according to different RNTIs. In this way, after receiving the scrambled DCI transmitted by the base station, the UE may distinguish, according to an RNTI, whether the DCI is DCI used for common scheduling or DCI for transmitting indication information according to some embodiments of the present disclosure.

The step 101b includes: transmitting, by the base station, the indication information to the UE by using the DCI scrambled by using the RNTI.

The step 102b includes: receiving, by the UE, the indication information transmitted by the base station from DCI scrambled by the base station.

Based on the solution, the base station transmits the indication information to the UE by using DCI scrambled with an RNTI, so that the UE may determine, according to the RNTI, that the DCI is DCI used to transmit the indication information, so that the UE may transmit the CSI to the base station according to the indication information.

In the CSI transmission method provided in some embodiments of the present disclosure, still another possible implementation is that the foregoing step 101 may be specifically implemented by following substep 101c, and the foregoing step 102 may be specifically implemented by following substep 102c.

The substep 101c includes: transmitting, by the base station, the indication information to the UE by using reserved code points in the DCI.

It is noted that, the reserved code points in some embodiments of the present disclosure are reserved bits or status bits in the fields of the DCI. For example, assuming that one field of the DCI includes eight bits or status bits and the field has two reserved bits or status bits, the two reserved bits or status bits may be referred to as reserved code points.

Optionally, in some embodiments of the present disclosure, the reserved code points in the DCI may be reserved code points in a same field of the DCI or may be reserved code points in different fields of the DCI. This is not specifically limited in embodiments of the present disclosure.

The substep 102c includes: receiving, by the UE, the indication information transmitted by the base station from the reserved code points in the DCI.

Based on the solution, the base station may transmit the indication information to the UE by using the reserved code points in the DCI, so that the UE may transmit the CSI to the base station according to the indication information.

It may be understood that, in some embodiments of the present disclosure, the DCI in a foregoing possible implementation is predefined dedicated DCI (that is, the DCI is dedicated to transmitting the indication information). In this implementation, the base station transmits the indication information to the UE by using the dedicated DCI. The DCI in another foregoing possible implementation is a common DCI (that is, the DCI is used by the base station to schedule the UE) in the related art. In this implementation, the base station transmits the indication information to the UE by using the DCI scrambled with an RNTI. The DCI in still another foregoing possible implementation is also common DCI (that is, the DCI is used by the base station to schedule the UE) in the related art. In this implementation, the base station transmits the indication information to the UE by using the reserved code points in the common DCI.

Optionally, in some embodiments of the present disclosure, in a first possible implementation, when the frequency hopping information is specifically used to indicate that frequency hopping is required when the UE transmits the CSI on the short PUCCH, the indication information transmitted by the base station to the UE further includes a starting resource block of a frequency domain resource of the UE after the frequency hopping. That is, the UE may determine, according to the indication information, the starting resource block of the frequency domain resource of the UE after the frequency hopping.

For example, assuming that the starting resource block configured by the base station for the UE to transmit the CSI on the short PUCCH (the first symbol of the short PUCCH) is R1, and the frequency used by the starting resource block is f1, when the frequency hopping information indicates that frequency hopping is required when the UE transmits the CSI on the short PUCCH, the indication information may further include the starting resource block of the frequency domain resource of the UE after the frequency hopping (the second symbol of the short PUCCH), for example, R2. That is, after receiving the indication information, the UE may determine, according to the indication information, a frequency f2 used by a starting resource block of a frequency domain resource after frequency hopping.

Optionally, when the indication information includes the starting resource block of the frequency domain resource of the UE after the frequency hopping, a field representing the starting resource block of the frequency domain resource has an overhead of 9 bits.

Optionally, in some embodiments of the present disclosure, in a second possible implementation, when the frequency hopping information is specifically used to indicate that frequency hopping is required when the UE transmits the CSI on the short PUCCH, the UE may determine, according to a predefined frequency hopping pattern, a starting resource block of a frequency domain resource of the UE after the frequency hopping.

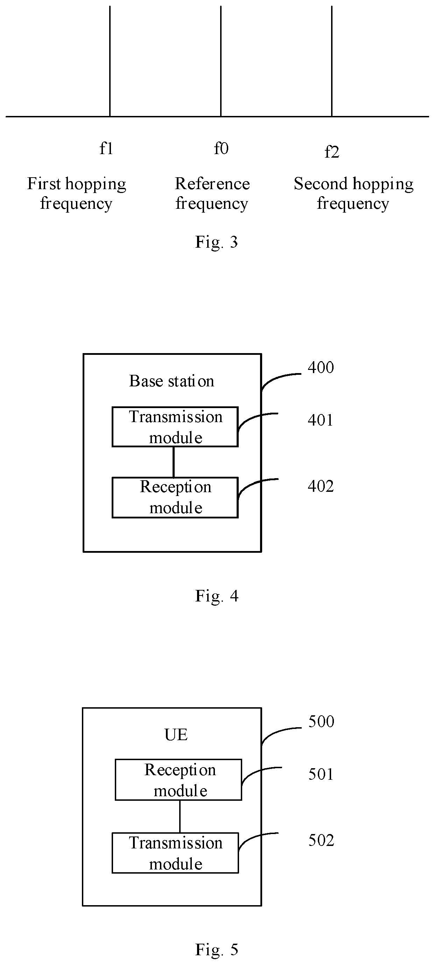

For example, Fig. 3 is a schematic diagram of a mirror frequency hopping pattern according to the present disclosure. When the predefined frequency hopping pattern is a mirror frequency hopping pattern, assuming that the UE determines the starting resource block of the second symbol of the short PUCCH according to the starting resource block of the first symbol of the short PUCCH in the current bandwidth part, the starting resource block of the second symbol is a starting resource block of a frequency domain resource of the UE after the frequency hopping. Assuming that reference resource blocks include 0 to 274 RBs, and a frequency corresponding to the middle resource block among resource blocks is f0, when a frequency corresponding to a resource block of the first symbol in the short PUCCH is f1, a frequency corresponding to a resource block of the second symbol is f2, where f0 - f1 = f2 - f0.

It is noted that, in some embodiments of the present disclosure, only the mirror frequency hopping pattern is used as an example for description. The predefined frequency hopping pattern may be another frequency hopping pattern. This is not specifically limited in embodiments of the present disclosure.

Based on the solution, the base station may use predefined DCI to transmit the indication information to the UE, and the indication information may be used to indicate a starting resource block of a frequency domain resource of the UE after the frequency hopping.

In some embodiments of the present disclosure, after the base station instructs the UE to transmit the CSI by means of the indication information, a time domain resource used by the UE to transmit the short PUCCH (i.e., a first time domain resource described below) may overlap with a time domain resource used by the UE to transmit other information or data. To prevent the overlap between the time domain resources from causing one of the transmission to fail, some embodiments of the present disclosure provides the following three possible implementations.

In a possible implementation, when the first time domain resource (that is, a time domain resource used by the UE to transmit a short PUCCH to the base station) overlaps partially with a second time domain resource (that is, a time domain resource used by the UE to transmit a scheduling request (SR) to the base station), after the foregoing step 102, a short PUCCH transmission method according to some embodiments of the present disclosure may further include the following step 106, or the foregoing step 103 may be specifically implemented by following substep 1031 and substep 1032 (not shown in drawings).

The step 106 includes: discarding, by the UE, the CSI.

The substep 1031 includes: jointly encoding, by the UE, the CSI and the SR.

The substep 1032 includes: transmitting, by the UE, a short PUCCH to the base station according to the indication information, where the short PUCCH includes the jointly encoded CSI and SR.

It is noted that, the jointly encoding in some embodiments of the present disclosure refers to that the UE encodes the CSI and the SR on a same resource. For example, A is data of the CSI, B is data of the SR, A and B are encoded together and then transmitted.

It is noted that, in some embodiments of the present disclosure, either of the step 103 and the step 106 may be selected to perform.

Based on the solution, when a time domain resource used by the UE to transmit the CSI overlaps partially with a time domain resource used to transmit an SR to the base station, the UE may choose to discard the CSI so as to preferentially ensure the transmission of SR. Alternatively, the UE may at first jointly encode the CSI and the SR, and then transmit the CSI and the SR together to the base station.

In another possible implementation, when a first time domain resource overlaps partially with a third time domain resource (that is, a time domain resource used by the UE to transmit uplink data to the base station), after the foregoing step 102, the CSI transmission method provided in some embodiments of the present disclosure may further include the foregoing step 106 or the following step 107.

The step 107 includes: discarding, by the UE, the uplink data.

It is noted that, the uplink data refers to data transmitted by the UE to the base station. The uplink data is transmitted by the UE to the base station by using a PUSCH. That is, the PUSCH carries the uplink data.

It is noted that, in some embodiments of the present disclosure, the step 103 may be performed after the step 107.

Based on the solution, when a time domain resource used by the UE to transmit the CSI overlaps partially with a time domain resource used by the UE to transmit the uplink data to the base station, the UE may choose to discard the CSI, to preferentially ensure the transmission of the uplink data. Alternatively, the UE may choose to discard the uplink data, to preferentially ensure the transmission of the CSI.

In still another possible implementation, when the first time domain resource overlaps partially with a fourth time domain resource (that is, a time domain resource used by the UE to transmit an acknowledgement (ACK) message to the base station), after the foregoing step 102, the CSI transmission method provided in some embodiments of the present disclosure may further include the foregoing step 106.

The ACK message in some embodiments of the present disclosure may be a message fed back by the UE to the base station after the UE receives the indication information transmitted by the base station. The ACK message may be used to provide the base station with an acknowledgement as to whether the UE has successfully received the indication information. The ACK message may include an acknowledgement (ACK) or a negative acknowledgement (NACK). The ACK represents that the UE has successfully received the indication information. The NACK represents that the UE has not successfully received the indication information, for example, an error occurs when the UE checks the indication information. In case of a NACK, the base station may determine that it is necessary to retransmit the indication information.

Based on the solution, when a time domain resource used by the UE to transmit CSI overlaps partially with a time domain resource used by the UE to transmit an ACK message to the base station, the UE may choose to discard the CSI, to preferentially ensure the transmission of the ACK message.

In some embodiments of the present disclosure, the foregoing various implementations are described exemplarily by taking the case that the UE transmits CSI to the base station once as an example. In practice, the UE may transmit aperiodic CSI to the base station.

Based on the solution, UE may transmit aperiodic CSI to a base station according to indication information transmitted by the base station. Since the UE transmits aperiodic CSI only when the base station instructs the UE to do so, the aperiodic CSI may accurately reflect current channel quality. In this way, after acquiring aperiodic CSI, the base station may accurately estimate current channel quality according to the aperiodic CSI, so that the base station may accurately schedule the UE.

Based on the solution, the UE may transmit aperiodic CSI to the base station according to indication information transmitted by the base station, so as to transmit current CSI to the base station, so that the base station may perform more accurate scheduling according to the current CSI.

Fig. 4 is a schematic structural diagram of a base station according to some embodiments of the present disclosure. The base station 400 includes a transmission module 401 and a reception module 402. The transmission module 401 is configured to transmit indication information to UE, where the indication information is used for the UE to transmit CSI to the base station. The reception module 402 is configured to receive a short PUCCH transmitted by the UE, where the short PUCCH includes the CSI.

In a possible implementation, the transmission module 401 is specifically configured to transmit the indication information to the UE by using DCI, where the DCI is predefined DCI.

In a possible implementation, the base station further includes a scrambling module 403. The scrambling module 403 is configured to scramble DCI by using an RNTI. The transmission module 401 is further configured to transmit the indication information to the UE by using the DCI scrambled by the scrambling module 403.

In a possible implementation, the transmission module 401 is specifically configured to transmit the indication information to the UE by using the reserved code points in the DCI.

In a possible implementation, the indication information includes at least one of the following: a time interval, a starting symbol of the short PUCCH, a length of the short PUCCH, a starting resource block of the short PUCCH, a number of resource blocks occupied by the short PUCCH, frequency hopping information, or a CRC value, the time interval is a time gap between a slot when the UE receives the indication information and a slot when the UE transmits the short PUCCH, and the frequency hopping information is used for indicating whether frequency hopping is required when the UE transmits the short PUCCH.

In a possible implementation, the frequency hopping information is specifically used to indicate that frequency hopping is required when the UE transmits the short PUCCH, and the indication information further includes a starting resource block of a frequency domain resource of the UE after the frequency hopping.

In a possible implementation, the CSI is aperiodic CSI transmitted by the UE to the base station.

Based on the solution, UE may transmit aperiodic CSI to a base station according to indication information transmitted by the base station. Since the UE transmits aperiodic CSI only when the base station instructs the UE to do so, the aperiodic CSI may accurately reflect current channel quality. In this way, after acquiring aperiodic CSI, the base station may accurately estimate current channel quality according to the aperiodic CSI, so that the base station may accurately schedule the UE.

The base station 400 in some embodiments of the present disclosure can implement various processes implemented by the base station in the method embodiments of Fig. 1 to Fig. 4. To avoid repetition, details are not described herein again.

The base station provided in some embodiments of the present disclosure may transmit indication information to UE according to an actual requirement and receive a short PUCCH including CSI that is transmitted by the UE to the base station according to the indication information, so that the base station can flexibly acquire CSI as required, and a channel state can be determined more accurately and rapidly compared with conventional periodic acquisition of CSI, thereby facilitating scheduling by the base station.

Fig. 5 is a schematic structural diagram of UE according to some embodiments of the present disclosure. UE 500 includes a reception module 501 and a transmission module 502. The reception module 501 is configured to receive indication information transmitted by a base station, where the indication information is used for the UE to transmit CSI to the base station. The transmission module 502 is configured to transmit a short PUCCH to the base station according to the indication information, where the short PUCCH includes the CSI.

In a possible implementation, the reception module 501 is specifically configured to receive, by using DCI, the indication information transmitted by the base station, where the DCI is predefined DCI.

In a possible implementation, the reception module 501 is specifically configured to receive, by using the DCI scrambled by the base station, the indication information transmitted by the base station.

In a possible implementation, the reception module 501 is specifically configured to receive, by using the reserved code points in the second DCI, the indication information transmitted by the base station.

In a possible implementation, the indication information includes at least one of the following: a time interval, a starting symbol of the short PUCCH, a length of the short PUCCH, a starting resource block of the short PUCCH, a number of resource blocks occupied by the short PUCCH, frequency hopping information, or a CRC value, the time interval is a time gap between a slot when the UE receives the short PUCCH and a slot when the UE transmits the CSI, and the frequency hopping information is used for indicating whether frequency hopping is required when the UE transmits the short PUCCH.

In a possible implementation, the frequency hopping information is used for indicating that frequency hopping is required when the UE transmits the short PUCCH, and the indication information further includes a starting resource block of a frequency domain resource of the UE after the frequency hopping.

In a possible implementation, the frequency hopping information is specifically used for indicating that frequency hopping is required when the UE transmits the short PUCCH. The indication information is specifically used for indicating that frequency hopping is required when the UE transmits the short PUCCH. The UE further includes a determination module 503. The determination module 503 is configured to determine, according to a predefined frequency hopping pattern, a starting resource block of a frequency domain resource of the UE after the frequency hopping.

In a possible implementation, a first time domain resource overlaps partially with a second time domain resource, the first time domain resource is a time domain resource used by the UE to transmit CSI to the base station, the second time domain resource is a time domain resource used by the UE to transmit an SR to the base station, and the short PUCCH specifically includes the jointly encoded CSI and SR.

In a possible implementation, a first time domain resource overlaps partially with a third time domain resource, the first time domain resource is a time domain resource used by the UE to transmit CSI to the base station, the third time domain resource is a time domain resource used by the UE to transmit uplink data to the base station, and the transmission module 502 is further configured to discard the uplink data.

In a possible implementation, CSI is aperiodic CSI transmitted by the UE to the base station.

The UE 500 in some embodiments of the present disclosure can implement various processes implemented by the UE in the method embodiments in Fig. 1 to Fig. 5. To avoid repetition, details are not described herein again.

After receiving indication information transmitted by a base station, the UE provided in some embodiments of the present disclosure transmits a short PUCCH including CSI to the base station according to the indication information, so that the base station can flexibly acquire CSI as required, and compared with conventional periodic transmission of CSI to the base station, CSI is transmitted to the base station according to a requirement of the base station, so that the base station can determine a channel state more accurately, thereby facilitating scheduling by the base station.

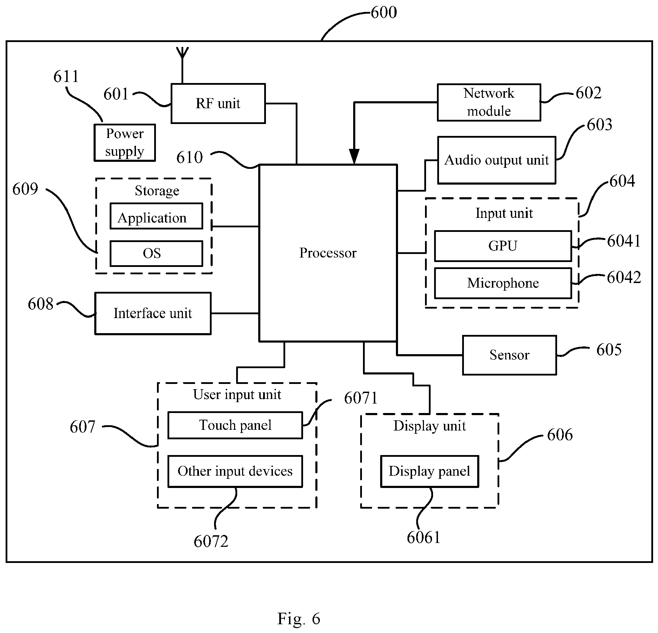

Fig. 6 is a schematic hardware structure diagram of UE for implementing the embodiments of the present disclosure. UE 600 includes, but is not limited to, an RF unit 601, a network module 602, an audio output unit 603, an input unit 604, a sensor 605, a display unit 606, a user input unit 607, an interface unit 608, a storage 609, a processor 610, and a power supply 611, among other components. It may be understood by those skilled in the art that the UE structure as shown in Fig. 6 does not constitute a limitation on the UE, and the UE may include more or fewer components than those shown, or some components may be combined, or different component arrangements are used. In some embodiments of the present disclosure, the UE includes, but is not limited to, a mobile phone, a tablet computer, a notebook computer, a palmtop computer, an in-vehicle terminal, a wearable device, a pedometer and the like.

The RF unit 601 is configured to: receive indication information transmitted by the base station, where the indication information is used for the UE to transmit CSI to the base station; and transmit a short PUCCH to the base station according to the indication information, where the short PUCCH includes the CSI.

After receiving the indication information transmitted by a base station, the UE provided in some embodiments of the present disclosure transmits a short PUCCH including CSI to the base station according to the indication information, so that the base station can flexibly acquire CSI as required, and compared with conventional periodic transmission of CSI to the base station, CSI is transmitted to the base station according to a requirement of the base station, so that the base station can determine a channel state more accurately, thereby facilitating scheduling by the base station.

It should be understood that in some embodiments of the present disclosure, the RF unit 601 may be configured to receive and transmit signals during receiving or transmitting information or during a call. Specifically, the RF unit 1201 may be configured to receive DL data from a base station to be processed by the processor 610, and additionally transmit UL data to the base station. Generally, the RF unit 601 includes, but is not limited to, an antenna, at least one amplifier, a transceiver, a coupler, a low noise amplifier, a duplexer, and the like. In addition, the RF 601 can also communicate with a network and other devices through a wireless communication system.

The UE provides a user with wireless broadband Internet access through the network module 602, for example, to enable the user to receive and transmit emails, browse web pages, access streaming media, and the like.

The audio output unit 603 may convert audio data received by the RF unit 601 or the network module 602 or stored in the memory 609 into an audio signal and output the audio signal as sound. Moreover, the audio output unit 603 can also provide audio output associated with a specific function performed by the UE 600 (for example, incoming call ringtone, message received ringtone and the like). The audio output unit 603 includes a speaker, a buzzer, a receiver, and the like.

The input unit 604 is configured to receive an audio or video signal. The input unit 604 may include a graphics processing unit (GPU) 6041 and a microphone 6042, and the GPU 6041 processes image data of a still picture or video obtained by an image capturing device (such as a camera) in a video capturing mode or an image capturing mode. Processed image frames can be displayed on the display unit 606. The image frames processed by the GPU 6041 may be stored in the storage 609 (or other storage medium) or transmitted via RF unit 601 or the network module 602. The microphone 6042 can receive sound and can process such sound into audio data. In a telephone call mode, the processed audio data can be converted into an output format that can be transmitted to a mobile communication base station via RF unit 601.

The UE 600 further includes at least one sensor 605 such as a light sensor, motion sensor, and other sensors. Specifically, the light sensor includes an ambient light sensor and a proximity sensor. The ambient light sensor can adjust the brightness of the display panel 6061 according to the intensity of the ambient light, and the proximity sensor can turn off the display panel 6061 and/or backlight when the UE 600 is moved near the ear. As a kind of motion sensor, an accelerometer sensor can detect the magnitude of acceleration in various directions (usually three axes). When the accelerometer sensor is stationary, the accelerometer sensor can detect the magnitude and direction of gravity. The accelerometer sensor can be used in posture identification of the mobile terminal (e.g., switch between portrait and landscape modes, related games, magnetometer posture calibration), vibration identification related function (such as pedometer, tapping), and the like. The sensor 605 may further include a fingerprint sensor, a pressure sensor, an iris sensor, a molecular sensor, a gyroscope, a barometer, a hygrometer, a thermometer, an infrared sensor, and the like. Details are not described herein.

The display unit 606 is configured to display information input by the user or information provided to the user. The display unit 606 may include a display panel 6061. The display panel 6061 may be configured in the form of a liquid-crystal display (LCD), an organic light-emitting diode (OLED) or the like.

The user input unit 607 may be configured to receive input numeric or character information and to generate key signal inputs related to user settings and functional control of the UE. Specifically, the user input unit 607 includes a touch panel 6071 and other input devices 6072. The touch panel 6071, also referred to as a touch screen, can collect a touch operation (for example, an operation of the user on the touch panel 6071 or near the touch panel 6071 using a finger, a stylus or any appropriate object or accessory) of the user on or near the touch panel 6071. The touch panel 6071 may include two parts, namely, a touch detection device and a touch controller. The touch detection device detects the position touched by the user, detects a signal brought by the touch operation, and transmits the signal to the touch controller. The touch controller receives touch information from the touch detection device, converts the touch information into contact coordinates, and sends the contact coordinates to the processor 610. The touch controller receives commands from the processor 610 and executes the commands. In addition, the touch panel 6071 may be implemented in various forms such as resistive, capacitive, infrared, and surface acoustic wave. In addition to the touch panel 6071, the user input unit 607 may further include other input devices 6072. Specifically, other input devices 6072 may include, but are not limited to, a physical keyboard, functional keys (for example, a volume control button, and a switch button), a trackball, a mouse, and a joystick. Details are not described herein.

Further, the touch panel 6071 may be overlaid on the display panel 6061. When the touch panel 6071 detects a touch operation on or near the touch panel 6071, the touch panel 6071 transmits the detected signal to the processor 610 to determine the type of a touch event. The processor 610 then provides a corresponding visual output on the display panel 6061 according to the type of the touch event. Although in Fig. 6, the touch panel 6071 and the display panel 6061 are used as two independent components to implement the input and output functions of the UE, the touch panel 6071 and the display panel 6061 may be integrated to implement the input and output functions of the UE in some embodiments. Details are not limited herein.

The interface unit 608 is an interface by which an external device is connected to the UE 600. For example, the external device may include a wired or wireless headset port, an external power (or battery charger) port, a wired or wireless data port, a memory card port, a port for connecting a device having an identification module, an audio input/output (I/O) port, a video I/O port, a headphone port, and the like. The interface unit 608 may be configured to receive input (for example, data information, and power) from the external device and transmit the received input to one or more components within the UE 600 or may be configured to transfer data between the UE 600 and the external device.

The storage 609 may be configured to store software programs as well as various data. The storage 609 may mainly include a program storage area and a data storage area. The program storage area may store an operating system, an application required for at least one function (for example, a sound playback function, and an image displaying function), and the like. The data storage area may store data (for example, audio data, and a phone book) created according to the use of a mobile phone. Moreover, the storage 609 may include a high-speed random access memory (RAM), and may further include a non-volatile storage, for example, at least one magnetic disk storage device, flash memory device, or other volatile solid state storage device.

The processor 610 is a control center of the UE, is connected to various portions of the entire UE using various interfaces and lines, and performs various functions of the UE and processes data by running or executing software programs and/or modules stored in the storage 609 and invoking data stored in the storage 609, so as to monitor the UE as a whole. The processor 610 may include one or more processing units. Preferentially, the processor 610 may integrate an application processor and a modem. The application processor mainly processes an operating system, a user interface, an application, and the like. The modem mainly processes wireless communication. It may be understood that the modem may not be integrated into the processor 610.

The mobile terminal 600 may further include a power supply 611 (for example, a battery) for powering various components. Preferably, the power supply 611 may be logically coupled to the processor 610 through a power management system, so as to implement charging management, discharging management, power consumption management, and other functions through the power management system.

In addition, the UE 600 includes some functional modules not shown. Details are not described herein again.

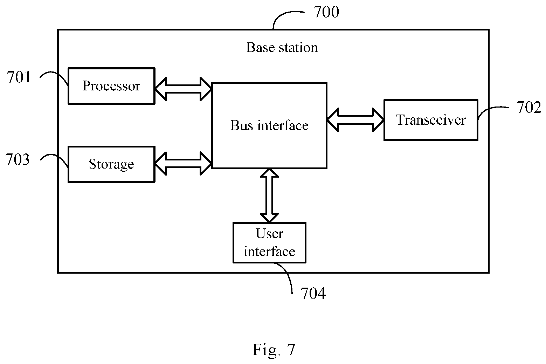

Fig. 7 is a schematic hardware structure diagram of a base station for implementing several embodiments of the present disclosure. A base station 700 includes a processor 701, a transceiver 702, a storage 703, a user interface 704, and a bus interface.

The transceiver 702 is configured to: transmit indication information to UE, where the indication information is used for the UE to transmit CSI to the base station; and receive a short PUCCH transmitted by the UE, where the short PUCCH includes the CSI.

The base station in some embodiments of the present disclosure may transmit indication information to UE according to an actual requirement, and receive a short PUCCH including CSI that is transmitted by the UE to the base station according to the indication information, so that the base station can flexibly acquire CSI as required, and a channel state can be determined more accurately and rapidly compared with conventional periodic acquisition of CSI, thereby facilitating scheduling by the base station.

In the embodiments of the present disclosure, in Fig. 7, a bus architecture may include any number of interconnected buses and bridges. Specifically, various circuits such as one or more processors represented by the processor 701 and a storage represented by the storage 703 are linked together. The bus architecture may also link various other circuits such as peripherals, voltage regulators, and power management circuits, which are well known in the art, and therefore are not further described herein. The bus interface provides an interface. The transceiver 702 may include a plurality of elements, that is, a transmitter and a receiver, to provide units for communicating with various other apparatuses over a transmission medium. For different user equipment, the user interface 704 may be an interface capable of externally/internally connecting desired devices, including, but not limited to, a keypad, a display, a speaker, a microphone, and a joystick. The processor 701 is responsible for managing the bus architecture and general processing. The storage 703 can store data used by the processor 701 while performing operations.

In addition, the base station 700 further includes some functional modules not shown. Details are not described herein again.

Optionally, some embodiments of the present disclosure further provide UE, including a processor 610, a storage 609, and a computer program stored in the storage 609 and executable on the processor 610. The computer program is configured to be executed by the processor 610 to implement various processes in the embodiments of the foregoing CSI transmission method, and can achieve the same technical effects. To avoid repetition, details are not described herein again.

Optionally, some embodiments of the present disclosure further provide a base station, including a processor 701, a storage 703, and a computer program stored in the storage 703 and executable on the processor 701. The computer program is configured to be executed by the processor 701 to implement various processes in the embodiments of the foregoing CSI transmission method, and can achieve the same technical effects. To avoid repetition, details are not described herein again.

Some embodiments of the present disclosure further provide a computer-readable storage medium, where the computer-readable storage medium stores therein a computer program, and the computer program is configured to be executed by a processor to implement various processes of the embodiments of the foregoing CSI transmission method, and can achieve the same technical effects. To avoid repetition, details are not described herein again. The computer-readable storage medium is, for example, a read-only memory (ROM), a RAM, a magnetic disk, an optical disc or the like.

It should be noted that the terms "include", "have", or any variation thereof used herein are intended to cover a non-exclusive inclusion, such that a process, a method, an article, or a device that includes a list of elements not only includes the list of elements, but also may include other elements not expressly listed or include elements inherent to the process, the method, the article, or the device. In case that there is no further limitation, an element preceded by "includes or including" does not preclude existence of additional identical elements in the process, the method, the article, or the device including the element.

From the foregoing description of the embodiments, a person skilled in the art will clearly appreciate that the method according to the embodiments may be implemented not only by software in conjunction with necessary generic hardware platform, but also by hardware, although the former will be preferred in most cases. Based on such an understanding, essential parts, or parts contributing to the related art, of the technical solution of the present disclosure may be implemented in form of a software product. The software product is stored in a storage medium (e.g., an ROM/RAM, a magnetic disk and an optical disc) and includes several instructions configured to be executed by a terminal (such as a handset, a computer, a server, an air conditioner or a network device) to perform the method according to the embodiments of the present disclosure.

The embodiments of the present disclosure are described above with reference to the accompanying drawings. However, the present disclosure is not limited to the foregoing specific implementations. The foregoing specific implementations are merely illustrative rather than limitative. In light of the teachings of the present disclosure, a person of ordinary skill in the art may further make various forms without departing from the spirit of the present disclosure and the scope of the claims, and these forms all fall within the scope of the present disclosure.

## Claims

1. A channel state information (CSI) transmission method, applied to a base station, comprising:
transmitting indication information to user equipment (UE), wherein the indication information is used for the UE to transmit CSI to the base station; and
receiving a short physical uplink control channel (PUCCH) transmitted by the UE, wherein the short PUCCH comprises the CSI.

2. The CSI transmission method according to claim 1, wherein the transmitting the indication information to the UE comprises:
transmitting the indication information to the UE by using downlink control information (DCI), wherein the DCI is predefined DCI.

3. The CSI transmission method according to claim 1, wherein, before the transmitting the indication information to the UE, the method further comprises:
scrambling downlink control information (DCI) by using a radio network temporary identity (RNTI);
the transmitting the indication information to the UE comprises:
transmitting the indication information to the UE by using the DCI scrambled by using the RNTI.

4. The CSI transmission method according to claim 1, wherein the transmitting the indication information to the UE comprises:
transmitting the indication information to the UE by using reserved code points in downlink control information (DCI).

5. The CSI transmission method according to any one of claims 1 to 4, wherein
the indication information comprises at least one of the following: a time interval, a starting symbol of the short PUCCH, a length of the short PUCCH, a starting resource block of the short PUCCH, a number of resource blocks occupied by the short PUCCH, frequency hopping information, or a cyclic redundancy check (CRC) value, the time interval is a time gap between a slot when the UE receives the indication information and a slot when the UE transmits the short PUCCH, and the frequency hopping information is used for indicating whether frequency hopping is required when the UE transmits the short PUCCH.

6. The CSI transmission method according to claim 5, wherein
the frequency hopping information is used for indicating that frequency hopping is required when the UE transmits the short PUCCH, and the indication information further comprises a starting resource block of a frequency domain resource of the UE after the frequency hopping.

7. The CSI transmission method according to claim 1, wherein
the CSI is aperiodic CSI transmitted by the UE to the base station.

8. A channel state information (CSI) transmission method, applied to user equipment (UE), comprising:
receiving indication information transmitted by a base station, wherein the indication information is used for the UE to transmit CSI to the base station; and
transmitting a short physical uplink control channel (PUCCH) to the base station according to the indication information, wherein the short PUCCH comprises the CSI.

9. The CSI transmission method according to claim 8, wherein the receiving the indication information transmitted by the base station comprises:
receiving, by using downlink control information (DCI), the indication information transmitted by the base station, wherein the DCI is predefined DCI.

10. The CSI transmission method according to claim 8, wherein the receiving the indication information transmitted by the base station comprises:
receiving, by using downlink control information (DCI) scrambled by the base station, the indication information transmitted by the base station.

11. The CSI transmission method according to claim 8, wherein the receiving the indication information transmitted by the base station comprises:
receiving, by using reserved code points in downlink control information (DCI), the indication information transmitted by the base station.

12. The CSI transmission method according to any one of claims 8 to 11, wherein
the indication information comprises at least one of the following: a time interval, a starting symbol of the short PUCCH, a length of the short PUCCH, a starting resource block of the short PUCCH, a number of resource blocks occupied by the short PUCCH, frequency hopping information, or a cyclic redundancy check (CRC) value, the time interval is a time gap between a slot when the UE receives the indication information and a slot when the UE transmits the short PUCCH, and the frequency hopping information is used for indicating whether frequency hopping is required when the UE transmits the short PUCCH.

13. The CSI transmission method according to claim 12, wherein
the frequency hopping information is used for indicating that frequency hopping is required when the UE transmits the short PUCCH, and the indication information further comprises a starting resource block of a frequency domain resource of the UE after the frequency hopping.

14. The CSI transmission method according to claim 12, wherein the frequency hopping information is used for indicating that frequency hopping is required when the UE transmits the short PUCCH, and the method further comprises:
determining, according to a predefined frequency hopping pattern, a starting resource block of a frequency domain resource of the UE after the frequency hopping.

15. The CSI transmission method according to claim 8, wherein a first time domain resource overlaps partially with a second time domain resource, the first time domain resource is a time domain resource used by the UE to transmit the CSI to the base station, and the second time domain resource is a time domain resource used by the UE to transmit a scheduling request (SR) to the base station; and
the short PUCCH comprises the CSI and the SR which are jointly encoded.

16. The CSI transmission method according to claim 8, wherein a first time domain resource overlaps partially with a third time domain resource, the first time domain resource is a time domain resource used by the UE to transmit the CSI to the base station, the third time domain resource is a time domain resource used by the UE to transmit uplink data to the base station, and the method further comprises:
discarding the uplink data.

17. The CSI transmission method according to claim 8, wherein
the CSI is aperiodic CSI transmitted by the UE to the base station.

18. Abase station, comprising a transmission module and a reception module, wherein
the transmission module is configured to transmit indication information to user equipment (UE), wherein the indication information is used for the UE to transmit channel state information (CSI) to the base station; and
the reception module is configured to receive a short physical uplink control channel (PUCCH) transmitted by the UE, wherein the short PUCCH comprises the CSI.

19. The base station according to claim 18, wherein
the transmission module is configured to transmit the indication information to the UE by using downlink control information (DCI), wherein the DCI is predefined DCI.

20. The base station according to claim 18, wherein the base station further comprises a scrambling module,
the scrambling module is configured to scramble downlink control information (DCI) by using a radio network temporary identity (RNTI);
the transmission module is configured to transmit the indication information to the UE by using the DCI scrambled by the scrambling module.

21. The base station according to claim 18, wherein
the transmission module is configured to transmit the indication information to the UE by using reserved code points in downlink control information (DCI).

22. The base station according to any one of claims 18 to 21, wherein
the indication information comprises at least one of the following: a time interval, a starting symbol of the short PUCCH, a length of the short PUCCH, a starting resource block of the short PUCCH, a number of resource blocks occupied by the short PUCCH, frequency hopping information, or a cyclic redundancy check (CRC) value, the time interval is a time gap between a slot when the UE receives the indication information and a slot when the UE transmits the short PUCCH, and the frequency hopping information is used for indicating whether frequency hopping is required when the UE transmits the short PUCCH.

23. The base station according to claim 22, wherein
the frequency hopping information is used for indicating that frequency hopping is required when the UE transmits the short PUCCH, and the indication information further comprises a starting resource block of a frequency domain resource of the UE after the frequency hopping.

24. User equipment (UE), comprising a reception module and a transmission module, wherein
the reception module is configured to receive indication information transmitted by a base station, wherein the indication information is used for the UE to transmit channel state information (CSI) to the base station; and
the transmission module is configured to transmit a short physical uplink control channel (PUCCH) to the base station according to the indication information received by the reception module, wherein the short PUCCH comprises the CSI.

25. The UE according to claim 24, wherein
the reception module is configured to receive, by using downlink control information (DCI), the indication information transmitted by the base station, the DCI is predefined DCI.

26. The UE according to claim 24, wherein
the reception module is configured to receive, by using downlink control information (DCI) scrambled by the base station, the indication information transmitted by the base station.

27. The UE according to claim 24, wherein
the reception module is configured to receive, by using reserved code points in downlink control information (DCI), the indication information transmitted by the base station.

28. The UE according to any one of claims 24 to 27, wherein
the indication information comprises at least one of the following: a time interval, a starting symbol of the short PUCCH, a length of the short PUCCH, a starting resource block of the short PUCCH, a number of resource blocks occupied by the short PUCCH, frequency hopping information, or a cyclic redundancy check (CRC) value, the time interval is a time gap between a slot when the UE receives the indication information and a slot when the UE transmits the short PUCCH, and the frequency hopping information is used for indicating whether frequency hopping is required when the UE transmits the short PUCCH.

29. The UE according to claim 28, wherein
the frequency hopping information is used for indicating that frequency hopping is required when the UE transmits the short PUCCH, and the indication information further comprises a starting resource block of a frequency domain resource of the UE after the frequency hopping.

30. The UE according to claim 28, wherein the frequency hopping information is used for indicating that frequency hopping is required when the UE transmits the short PUCCH, and the UE further comprises a determination module,
the determination module is configured to determine, according to a predefined frequency hopping pattern, a starting resource block of a frequency domain resource of the UE after the frequency hopping.

31. The UE according to claim 24, wherein a first time domain resource overlaps partially with a second time domain resource, the first time domain resource is a time domain resource used by the UE to transmit the CSI to the base station, and the second time domain resource is a time domain resource used by the UE to transmit a scheduling request (SR) to the base station; and
the short PUCCH specifically comprises the CSI and the SR which are jointly encoded.

32. The UE according to claim 24, wherein a first time domain resource overlaps partially with a third time domain resource, the first time domain resource is a time domain resource used by the UE to transmit the CSI to the base station, and the third time domain resource is a time domain resource used by the UE to transmit uplink data to the base station; and
the transmission module is further configured to discard the uplink data.

33. Abase station, comprising a processor, a storage, and a computer program stored in the storage and configured to be executed by the processor, wherein the processor is configured to execute the computer program to implement the steps in the channel state information (CSI) transmission method according to any one of claims 1 to 7.

34. User equipment (UE), comprising a processor, a storage, and a computer program stored in the storage and configured to be executed by the processor, wherein the processor is configured to execute the computer program to implement the steps in the channel state information (CSI) transmission method according to any one of claims 8 to 17.

35. A computer-readable storage medium storing therein a computer program, wherein the computer program is configured to be executed by a processor to implement the steps in the channel state information (CSI) transmission method according to any one of claims 8 to 17.
